Europäisches Patentamt

European Patent Office

Office européen des brevets

(11) Veröffentlichungsnummer: **0 229 942 B1**

# (12) EUROPÄISCHE PATENTSCHRIFT

(45) Veröffentlichungstag der Patentschrift: **26.06.91**

(21) Anmeldenummer: **86116645.2**

(22) Anmeldetag: **29.11.86**

Teilanmeldung 89121051.0 eingereicht am 29/11/86.

(51) Int. Cl.⁵: **F25B 41/06, F16K 31/04, F25B 49/02**

(54) **Regelverfahren für den Kältemittelzustrom zum Verdampfer von Kälteanlagen oder Wärmepumpen.**

(30) Priorität: **22.01.86 DE 3601817**

(43) Veröffentlichungstag der Anmeldung:
**29.07.87 Patentblatt 87/31**

(45) Bekanntmachung des Hinweises auf die
Patenterteilung:
**26.06.91 Patentblatt 91/26**

(84) Benannte Vertragsstaaten:
**AT BE CH DE ES FR GB GR IT LI LU NL SE**

(56) Entgegenhaltungen:
EP-A- 0 133 512        EP-A- 0 147 356
DE-A- 3 220 420        DE-A- 3 419 666
FR-A- 2 222 616        GB-A- 2 049 107
GB-A- 2 152 245        US-A- 4 362 027
US-A- 4 420 947        US-A- 4 478 051
US-A- 4 506 518        US-A- 4 548 047
US-A- 4 556 193        US-A- 4 593 881

(73) Patentinhaber: **Otto Egelhof GmbH & Co.**
**Stuttgarter Strasse 60**
**W-7012 Fellbach(DE)**

(72) Erfinder: **Gras, Horst**
**Schützenhausweg 33/1**
**W-7442 Neuffen(DE)**
Erfinder: **Blaich, Herbert**
**Gleiwitzer Strasse 12**
**W-7012 Fellbach 4(DE)**

(74) Vertreter: **Manitz, Gerhart, Dr. Dipl.-Phys. et al**
**MANITZ, FINSTERWALD & ROTERMUND Seel-**
**bergstrasse 23/25**
**W-7000 Stuttgart 50(DE)**

**Beschreibung**

Die Erfindung betrifft ein Verfahren zum Regeln des Kältemittelzustromes zu einem Verdampfer von Kälteanlagen bzw. Wärmepumpen, deren Kältemittelkreislauf von der Druckseite eines Kompressors über einen Kondensator, an oder hinter dessen Ausgang ein Sammler angeordnet sein kann, über ein bezüglich seines Öffnungsgrades steuerbares Expansionsventil sowie über einen Verdampfer zur Saugseite des Kompressors verläuft, und deren Expansionsventil mittels eines durch Rechner gesteuerten Stellmotors in Abhängigkeit der Signale von eingangs-und ausgangsseitig des Verdampfers angeordneten temperaturempfindlichen Sensoren sollwertsabhängig regelbar ist, wobei

- falls die Eingangstemperatur am Verdampfer unterhalb eines Schwellwertes liegt, das Expansionsventil im Sinne einer zunehmenden Öffnung betätigt wird, wenn die Differenz zwischen Eingangs- und Ausgangstemperatur am Verdampfer einen Sollwert überschreitet, bzw. im Sinne einer zunehmenden Schließung, wenn die genannte Differenz den Sollwert unterschreitet, und
- falls die Eingangstemperatur am Verdampfer oberhalb des Schwellwertes liegt, das Expansionsventil in Schließrichtung verstellt wird.

Ein derartiges Verfahren wird in der US-A 45 06 518 beschrieben, vgl. Spalte 7, Zeilen 5 bis 59.

Falls der Rechner umprogrammiert werden kann, kann die Steuerung des Expansionsventiles praktisch allen denkbaren Betriebsbedingungen angepaßt werden, ohne die Ventilkonstruktion abändern zu müssen. Aufgrund des angegebenen Verfahrens läßt sich also ein einziger Ventiltyp praktisch universell einsetzen.

Als Sensoren können handelsübliche Fühler eingesetzt werden, die beispielsweise mittels Thermowiderstände eine temperaturabhängige elektrische Spannung erzeugen und dementsprechend gegebenenfalls auch über sehr lange elektrische Signalleitungen mit dem Rechner verbunden sein können, welcher somit praktisch beliebig angeordnet werden kann. Dies bringt den weiteren Vorteil mit sich, daß gegebenenfalls auch ein für andere Zwecke bereits vorhandener Rechner, beispielsweise ein Prozeßrechner zur Steuerung einer Gesamtkälteanlage od.dgl., auch zur Steuerung des Expansionsventiles mitverwendet werden kann.

Bei der unterhalb eines Schwellwertes der Eingangstemperatur vorgesehenen Steuerung des Öffnungsgrades des Expansionsventiles in Abhängigkeit von der Differenz zwischen Eingangs- und Ausgangstemperatur des Verdampfers wird berücksichtigt, daß der Wert dieser Temperaturdifferenz auch ein Signal über den Füllungsgrad des Verdampfers darstellt (ein hoher, den Verdampfer durchsetzender Massenstrom, ergibt eine geringe, ein kleiner Massenstrom eine große Temperaturdifferenz). Somit läßt sich das Signal der Temperaturdifferenz als Eingangs- bzw. Regelgröße bei der Regelung des Kältemittelzustromes zum Verdampfer verwenden.

Indem das Expansionsventil zunächst in Schließrichtung verstellt wird, wenn die Eingangstemperatur am Verdampfer oberhalb des Schwellwertes liegt, wird berücksichtigt, daß nach längerem Stillstand einer Kälteanlage aufgrund der dann vorhandenen vergleichsweise hohen Verdampfertemperatur, welche gegebenenfalls der Umgebungstemperatur entsprechen kann, im Verdampfer ein Dampf hoher Dichte und hohen Druckes vorliegt, welcher zu einem entsprechend hohen Druck saugseitig des Kompressors führt. Wenn nun die Kälteanlage in Betrieb gesetzt wird, so muß der den Kompressor treibende Motor eine große Verdichtungsarbeit verrichten, weil die Verdichtung eines Dampfes großer Dichte eine wesentlich höhere Leistung erfordert als die Verdichtung von Dämpfen mit geringerer Dichte. Diese Phase hohen Leistungsbedarfs wird aufgrund des zunächst in Schließrichtung verstellten Expansionsventiles verkürzt.

Allerdings treten bei dieser zuletztgenannten Betriebsphase in der Regel zwischen Eingangs- und Ausgangstemperatur des Verdampfers sehr hohe Temperaturdifferenzen auf, so daß bei einer nachfolgenden Regelung des Expansionsventiles in Abhängigkeit von der Temperaturdifferenz zwischen Eingangs-und Ausgangstemperatur des Verdampfers eine extrem weite Öffnung des Expansionsventiles bewirkt würde.

Deshalb ist es Aufgabe der Erfindung, die Steuerung des Expansionsventiles in optimaler Weise an unterschiedliche Einsatzbedingungen anzupassen.

Diese Aufgabe wird erfindungsgemäß dadurch gelöst, daß, falls die Eingangstemperatur am Verdampfer in der Nähe des Schwellwertes bzw. zwischen diesem und einem benachbarten Schwellwert liegt, das Expansionsventil ausschließlich in Abhängigkeit von der Eingangstemperatur gesteuert wird, und zwar derart, daß die Eingangstemperatur nahezu konstant bleibt bzw. nur wenig absinkt, wobei sich die Ausgangstemperatur am Verdampfer an die Eingangstemperatur annähert.

Diese besondere Betriebsart wird beendet, sobald die Verdampferausgangstemperatur einen Wert dicht, z.B. 2° K, unterhalb der Verdampfereingangstemperatur erreicht hat und/oder die Verdampfereingangstemperatur auf einen zweiten Schwellwert abgesunken ist, der relativ dicht, z.B. 2° K, unterhalb des erstgenannten Schwellwertes liegt. Danach erfolgt dann die Regelung in Abhängigkeit von der Differenz zwischen Eingangs- und Ausgangstemperatur am Verdampfer.

Um nach einem längeren Stillstand der Kälteanlage bzw. Wärmepumpe eine möglichst schnelle Temperaturabsenkung im Verdampfer zu erreichen, kann das Expansionsventil vollständig geschlossen werden, solange die Verdampfereingangstemperatur hohe Werte hat.

Gegebenenfalls ist es jedoch zweckmäßig, das Expansionsventil mehrfach kurz zu öffnen, wobei eine Steuerung durch Impulsbreitenmodulation bevorzugt wird. Stattdessen ist auch eine analoge Steuerung mit über längere Zeit etwas geöffnetem Expansionsventil möglich. Sowohl bei mehrfach kurzzeitiger als auch bei kontinuierlicher Öffnung des Expansionsventiles erfolgt dessen Steuerung allein in Abhängigkeit von der Verdampfereingangstemperatur. Diese Steuerungsweise ist insbesondere dann von Vorteil, wenn die Menge des im Verdampfer befindlichen Dampfes im Vergleich zur Leistung des Kompressors relativ gering ist. Würde in einem derartigen Falle das Expansionsventil über längere Zeit geschlossen gehalten werden, so könnte der Kompressor den Verdampfer so weit evakuieren, daß die weitere Arbeit des Kompressors keinerlei zusätzlichen Druckabfall bzw. keinerlei zusätzliche Temperaturminderung im Verdampfer bewirken könnte. In derartigen Fällen ist im Hinblick auf eine angestrebte möglichst schnelle Temperaturabsenkung im Verdampfer vorteilhaft, wenn dem Verdampfer etwas zusätzliches Kältemittel zugeführt wird.

Um das Verfahren zum Regeln des Kältemittelstromes in optimaler Weise ausführen zu können, ist die Verwendung von Rechnern bevorzugt, an denen ein Vorwahlschalter, beispielsweise in Form eines Potentiometers und zweckmäßigerweise mit feinstufiger Unterteilung, zur Ein- und Verstellung des Sollwertes für die Differenz zwischen Eingangs- und Ausgangstemperatur und/oder zumindest ein weiterer derartiger Schalter zur Ein- bzw. Verstellung der genannten Schwellwerte angeordnet sind. Zusätzlich oder alternativ können am Rechner auch bevorrechtigte Digitaleingänge zur Soll- und/oder Schwellwertvorgabe mittels eines übergeordneten Rechners vorgesehen sein.

Darüber hinaus können weitere bevorrechtigte Eingänge zweckmäßig sein.

Beispielsweise kann ein bevorrechtigter Eingang durch Ein- bzw. Ausschalten des Kompressors erregbar sein, mit der Folge, daß der Rechner das Expansionsventil bei stillstehendem Kompressor zur vollständigen Schließung ansteuern kann. Bei einer derartigen Anordnung erübrigen sich gesonderte Absperrventile, welche bei bisherigen Kälteanlagen oftmals in Reihe zum Expansionsventil angeordnet sind und simultan mit dem Einschalten des Kompressors geöffnet bzw. mit dem Ausschalten desselben geschlossen werden.

Ein weiterer bevorrechtigter Eingang kann erregt werden, wenn der Verdampfer abgetaut werden soll, d.h. beim sogenannten Defroster-Betrieb. Falls der Verdampfer mittels einer gesonderten elektrischen oder sonstigen Heizung abgetaut wird, kann der Rechner das Expansionsventil zu einer vollständigen Schließung veranlassen. Wird dagegen der Verdampfer durch sogenannte Heißgasabtauung abgetaut oder zur Enteisung im Umkehrbetrieb betrieben, so wird der Rechner das Expansionsventil für eine vollständige Öffnung ansteuern.

Der Rechner sollte zweckmäßigerweise als sogenannter Proportional-Integral-Regler mit einstellbarem Proportional- und/oder Integralanteil arbeiten. Dazu wird ein digitaler Rechner bevorzugt, d.h. die temperaturabhängigen Signale der Sensoren werden dem Rechner nach entsprechender Analog-Digital-Wandlung digitalisiert zugeführt, wobei die Analog-Digital-Wandler einerseits direkt als Teil des Rechners oder andererseits als separate Glieder an den Sensoren angeordnet sein können.

Um Inspektions- bzw. Einstellarbeiten zu erleichtern, kann der Rechner Meßausgänge besitzen, an denen Signale abgreifbar sind, welche die Eingangs- und/oder Ausgangs-temperatur bzw. ganz allgemein die von den zur Steuerung bzw. Regelung der Kälteanlage oder Wärmepumpe dienenden Sensoren ermittelten Meßgrößen wiedergeben, beispielsweise in Form einer temperaturproportionalen Spannung. Damit genügt es, gegebenenfalls am Rechner und dementsprechend unter Umständen in größerer Entfernung von der Kälteanlage ein elektrisches Meßgerät, beispielsweise einen Spannungsmesser, anzuschließen, dessen Anzeige dann unmittelbar die Meßgröße darstellt, beispielsweise eine Temperatur.

Schließlich ist vorzugsweise vorgesehen, daß der Rechner Ausgänge für Zustandsanzeigen, insbesondere für als Zustandsanzeigen angeordnete Lampen, z.B. Leuchtdioden od.dgl., aufweist, welche z.B. erregbar sind, wenn Stellmotor und Rechner mit ihrer Speisespannung versorgt sind, das Expansionsventil öffnet oder schließt, am Rechner das Signal "Abtauen" vorliegt und/oder Fehler an den Sensoren oder deren Zuleitungen oder auch Fehler in der Elektronik aufgetreten sind.

Als Stellmotor wird vorzugsweise ein Elektromotor verwendet, insbesondere ein zweiphasig bipolarer Schrittmotor.

Durch den Einsatz von Schrittmotoren wird der elektronische Aufwand zur Durchführung des erfindungsgemäßen Verfahrens wesentlich vermindert. Ein elektrischer Schrittmotor wird mit elektrischen Impulsen, im allgemeinen Rechteckimpulsen, angesteuert, wobei der Motor bei jedem Impuls eine Stellbewegung vorgegebener Größe in der einen oder anderen Richtung ausführt, je nach Art des Impulses. Dementsprechend bestimmt die Zahl der Impulse den Gesamtverstellweg, während die zeitliche Aufeinanderfolge der Impulse die Verstellgeschwindigkeit bestimmt. Damit erübrigen sich gesonderte Elemente zur Überwachung des Verstellweges bzw. der Verstellgeschwindigkeit. Besonders bevorzugt ist nun eine Anordnung, bei der mittels des Schrittmotors eine vielstufige und dementsprechend feine Steuerung des Verschlußorganes des Expansionsventiles möglich ist, d.h. das Verschlußorgan des Expansionsventiles führt bei jedem Bewegungsschritt des Schrittmotors einen relativ geringen Hub aus. Damit ist auch im Teillastbereich, wenn das Verschlußorgan nur einen geringen Anteil des je nach Ventilkonstruktion konstruktiv möglichen maximalen Öffnungsguerschnittes freigibt, eine besonders feinfühlige Beeinflussung des Kältemittelstromes im Expansionsventil möglich. Dies bringt den weiteren Vorteil mit sich, daß das Expansionsventil ohne konstruktive Abänderung für unterschiedliche Kältemittel eingesetzt werden kann.

Die Verwendung weitestgehend beliebiger, gegebenenfalls bereits vorhandener Rechner zur Regelung der Kälteanlage wird wesentlich erleichtert, wenn eine als Schnittstelle zwischen, dem Rechner sowie dem Stellmotor angeordnete motoreigene Steuerelektronik vorhanden ist, welche übliche digitale Eingangssignale zu verarbeiten vermag und bevorzugt im bzw. am Gehäuse des Stellmotors untergebraczt wird.

Im übrigen wird bezüglich bevorzugter Merkmale der Erfindung auf die Unteransprüche sowie die nachfolgende Beschreibung verwiesen, in der die Erfindung anhand der Zeichnung genauer erläutert wird.

Dabei zeigt

Fig. 1    ein Blockschaltbild einer Wärmepumpe mit erfindungsgemäßer Regelung,

Fig. 2    ein Datenflußdiagramm zur Veranschaulichung der Rechnerarbeit und

Fig. 3    ein Diagramm, welches die Verdampfereingangstemperatur in Abhängigkeit von der Laufzeit t des Kompressors wiedergibt.

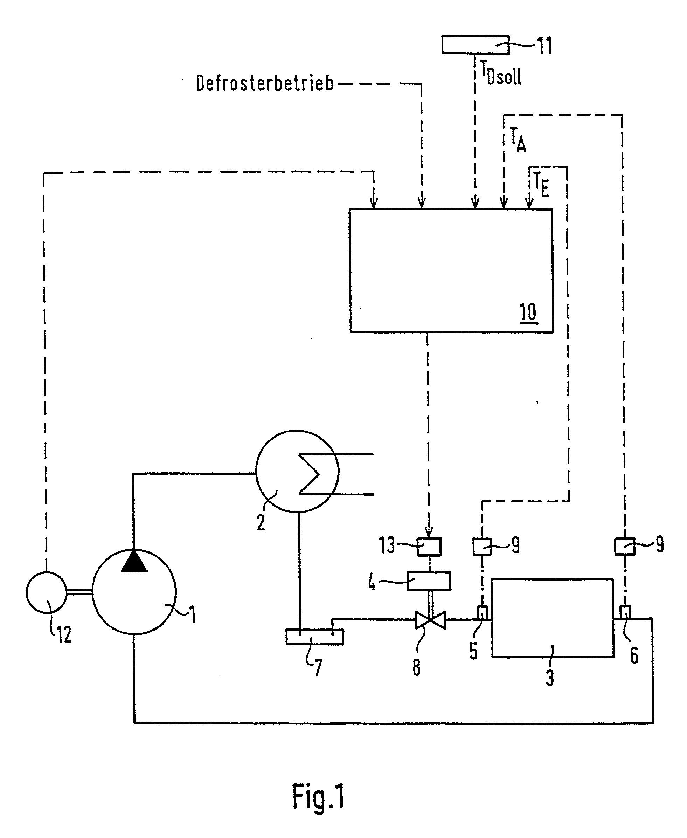

Gemäß Fig. 1 besteht die Kälteanlage im wesentlichen aus einem Kältemittelkreislauf mit einem Kompressor 1, einem druckseitig desselben angeordneten Kondensator 2 sowie einem saugseitig des Kompressors angeordneten Verdampfer 3, dessen Eingang mit dem Ausgang des Kondensators 2 über ein durch einen Stellmotor 4 gesteuertes Expansionsventil 8 sowie einen zwischen dasselbe und den Kondensator geschalteten Sammler 7 für kondensiertes Kältemittel verbunden ist.

Am Eingang und Ausgang des Verdampfers sind Temperaturfühler 5 und 6 angeordnet, die jeweils eine elektrische Spannung mit von der gemessenen Temperatur abhängigem Pegel erzeugen. Diese Spannungen werden mittels Analog-Digital-Wandler 9 in digitale Eingangssignale $T_E$ bzw. $T_A$ für einen Rechner 10 umgewandelt und demselben als Eingangssignale zugeleitet.

Der Rechner 10 erhält von einem ein- bzw. verstellbaren Sollwertgeber 11 Sollwerte $T_{Dsoll}$ für die Temperaturdifferenz $T_D = T_E - T_A$. Im übrigen kann der Sollwertgeber 11 gegebenenfalls auch weitere Sollwerte für besondere Betriebsphasen und/oder Schwellwerte - vorzugsweise veränderbar - vorgeben. Darüber hinaus besitzt der Rechner 10 bevorrechtigte Eingänge, welche zur Eingabe von Signalen dienen, die ihrerseits wiedergeben, ob der Motor 12 des Kompressors 1 läuft und/oder ob ein Defrosterbetrieb zum Abtauen des Verdampfers 3 eingeschaltet ist.

In Abhängigkeit von den Eingangssignalen steuert bzw. regelt der Rechner 10 den Stellmotor 4, indem entsprechende Ausgangssignale vom Rechner an eine dem Stellmotor 4 vorgeschaltete, dieselben steuernde Steuerelektronik 13 gegeben werden.

Der Rechner 10 arbeitet bevorzugt digital, dementsprechend sind alle Eingangs- und Ausgangssignale des Rechners 10 digitalisiert.

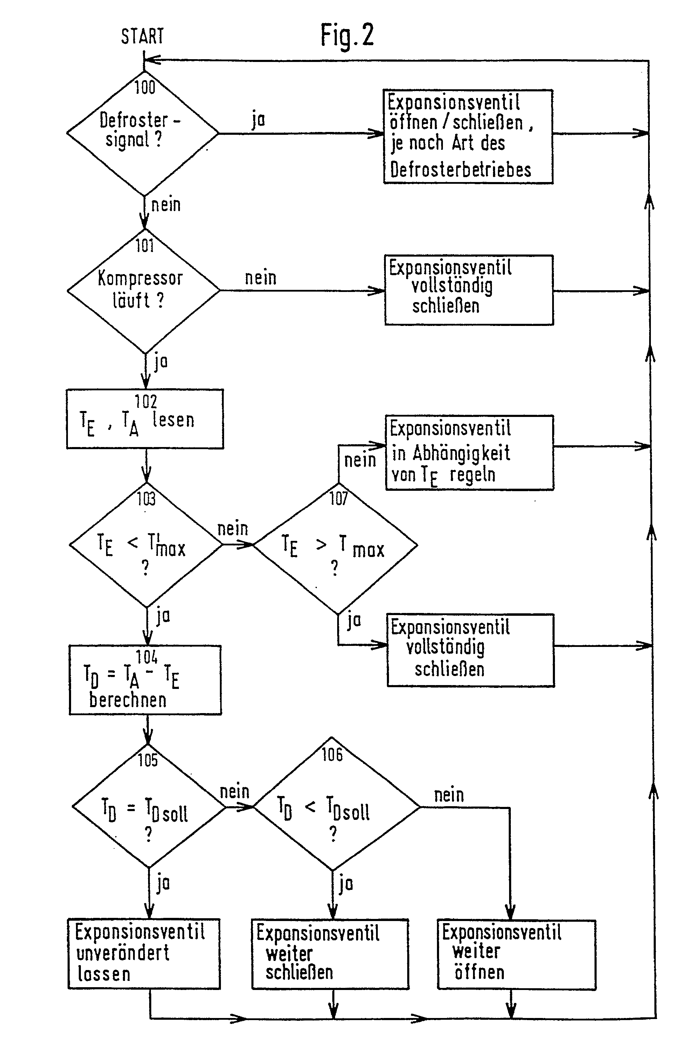

Gemäß Fig. 2 überprüft der Rechner 10 bei Position 100 zunächst, ob ein Defrosterbetrieb zum Abtauen des Verdampfers eingeschaltet ist. Ist dies der Fall, so wird das Expansionsventil entweder geöffnet oder geschlossen, je nachdem, in welcher Weise der Verdampfer beim Defrosterbetrieb zum Abtauen erwärmt wird. Erfolgt die Erwärmung mittels einer gesonderten, in der Regel elektrischen Heizung, so wird das Expansionsventil geschlossen. Erfolgt die Erwärmung des Verdampfers dadurch, daß der Verdampfer durch entsprechende Verstellung von Umschaltventilen (in Fig. 1 nicht dargestellt) unmittelbar an die Druckseite des Kompressors 1 angeschlossen wird (Umkehrbetrieb), so wird das Expansionsventil 8 geöffnet, um eine vom Verdampfer 3 zum Kondensator 2 führende, gegenüber dem normalen Kühlbetrieb umgekehrte Strömungsrichtung zu ermöglichen, bei der der Verdampfer die Funktion eines Kondensators übernimmt und dementsprechend erwärmt wird, während der Kondensator als Verdampfer arbeitet und abkühlt.

In gleicher Weise wird das Expansionsventil 8 bei Heißgasabtauung geöffnet, bei der durch Verstellung von Umschaltventilen die Druckseite des Kompressors 1 direkt mit dem Eingang des Expansionsventiles 8 verbunden wird.

Danach überprüft der Rechner 10 gemäß Position 101, ob der Kompressor 1 bzw. dessen Motor 12 laufen. Bei Stillstand wird das Expansionsventil 8 geschlossen.

Wenn der Defrosterbetrieb nicht eingeschaltet ist und der Kompressor 1 läuft, werden gemäß Position 102 die von den Temperaturfühlern 5 und 6 erzeugten, die Eingangs-und Ausgangstemperatur am Verdampfer 3 wiedergebenden Signale $T_E$ sowie $T_A$ gelesen.

Sodann wird zunächst bei Position 103 überprüft, ob das Eingangssignal $T_E$ kleiner ist als ein erster Schwellwert $T'_{max}$ ist.

Falls dies der Fall ist, wird bei Position 104 die Differenz $T_D$ zwischen den Eingangssignalen $T_E$ sowie $T_A$ gemäß $T_D = T_A - T_E$ berechnet und mit einem Sollwert $T_{Dsoll}$ verglichen.

Dazu wird bei Position 105 überprüft, ob $T_D$ - innerhalb eines vorgegebenen Intervalles - mit $T_{Dsoll}$ übereinstimmt. Ist dies der Fall, wird der Stellmotor 4 des Expansionsventiles nicht betätigt, d.h. die Stellung des Expansionsventiles bleibt unverändert.

Wenn $T_D$ und $T_{Dsoll}$ nicht hinreichend übereinstimmen, wird bei Position 106 überprüft, ob $T_D$ kleiner (oder größer) als der Sollwert $T_{Dsoll}$ ist. Ist dies der Fall, d.h. liegt $T_D$ unterhalb seines Sollwertes, so wird der Stellmotor 4 des Expansionsventiles 8 im Sinne einer Öffnung desselben angesteuert. Im anderen Fall, d.h. wenn der Wert von $T_D$ oberhalb des zugehörigen Sollwertes liegt, wird der Stellmotor 4 des Expansionsventiles 8 im Sinne einer zunehmenden Öffnung desselben angesteuert.

Falls sich bei Position 103 ergibt, daß die Eingangstemperatur $T_E$ nicht kleiner ist als der angegebene Schwellwert $T'_{max}$, so wird zunächst bei 107 überprüft, ob $T_E$ oberhalb eines weiteren Schwellwertes $T_{max}$ liegt, der etwas größer als $T'_{max}$ ist (beispielsweise liegt die Differenz zwischen $T_{max}$ und $T'_{max}$ bei 2 °K). Ist dies der Fall, so wird der Stellmotor 4 des Expansionsventiles 8 im Sinne einer vollständigen Schließung desselben angesteuert.

Wenn die Eingangstemperatur $T_E$ oberhalb von $T'_{max}$ liegt, muß die Kälteanlage über längere Zeit stillgestanden haben. Durch die nun zunächst erfolgende vollständige Schließung des Expansionsventiles 8 bei laufendem Kompressor 1 soll erreicht werden, daß der Kompressor den nach. längerem Stillstand im Verdampfer vorhandenen Dampf großer Dichte und hohen Druckes möglichst schnell beseitigen kann, ohne über eine übermäßig lange Zeit eine besonders hohe Verdichtungsarbeit verrichten zu müssen. Mit der Abführung des Dampfes aus dem Verdampfer 3 wird gleichzeitig die Temperatur im Verdampfer 3 stark abgesenkt.

Wenn aber die Leistung des Kompressors 1 im Vergleich zur Dampfmenge im Verdampfer 3 außerordentlich groß ist, so könnte bei geschlossen bleibendem Expansionsventil 8 der Fall eintreten, daß der Kompressor 1 den Verdampfer 3 weitestgehend evakuiert und die weitere Arbeit des Kompressors zu keiner zusätzlichen Druck- und Temperaturänderung im Verdampfer führen kann. Bei derartigen Kälteanlagen ist es zweckmäßig, das Expansionsventil 8 kurzzeitig bzw. mehrfach kurzzeitig zu öffnen, wobei die Steuerung des Expansionsventiles 8 bevorzugt durch Impuls-breitenmodulation mit von der Eingangstemperatur $T_E$ abhängigem Öffnungsgrad erfolgt. Dadurch wird dem Verdampfer 3 zusätzliches Kältemedium zugeführt, welches sodann vom Kompressor 1 unter Minderung von Druck und Temperatur im Verdampfer 3 abgeführt wird. Statt einer mehrfach kurzzeitigen Öffnung kann das Expansionsventil 8 auch über längere Zeit ein wenig geöffnet werden. Auch hier erfolgt die Steuerung des Öffnungsgrades bevorzugt in Abhängigkeit von $T_E$.

Wenn die Eingangstemperatur $T_E$ bei $T_{max}$ bzw. zwischen $T_{max}$ und $T'_{max}$ liegt, erfolgt eine Steuerung bzw. Regelung des Stellmotors 4 des Expansionsventiles 8 ausschließlich in Abhängigkeit von der Eingangstemperatur bzw. dem entsprechenden Signal $T_E$ derart, daß die Verdampfereingangstemperatur $T_E$ nahezu konstant bleibt und nur langsam sinkt, während sich die Verdampferausgangstemperatur $T_A$ an $T_E$ annähert. Sobald $T_E$ unterhalb des ersten Schwellwertes $T'_{max}$ liegt und/oder wenn sich $T_A$ hinreichend an $T_E$ angenähert hat, erfolgt die oben bereits beschriebene Signalverarbeitung entsprechend den Positionen 104 bis 106.

Nach Durchführung der vorbeschriebenen Signalverarbeitung wird der gleiche Vorgang wiederholt, wobei nunmehr aufgrund des in der Regel verstellten Expansionsventiles 8 veränderte Werte von $T_E$ sowie $T_A$ verarbeitet werden.

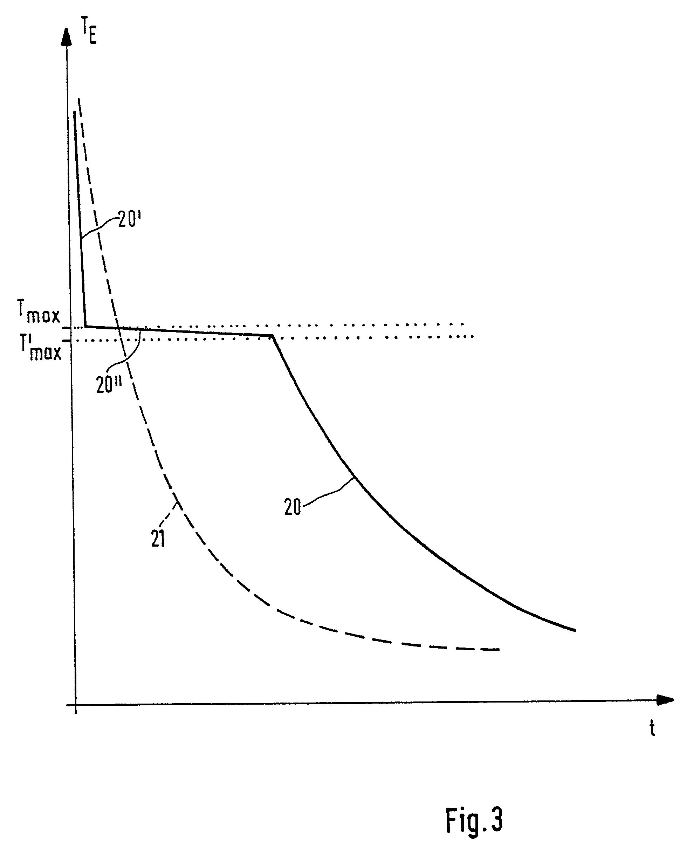

Aufgrund der beschriebenen Signalverarbeitung ergibt sich der in Fig. 3 dargestellte zeitliche Verlauf der Verdampfereingangstemperatur bzw. des dieselbe wiedergebenden Signales $T_E$. Im übrigen ergibt sich auch ein entsprechender Verlauf des Eingangsdruckes am Verdampfer 3, weil sich Druck und Temperatur am bzw. im Verdampfer simultan und gleichgerichtet ändern.

Die den Verlauf der Eingangstemperatur darstellende Kurve besitzt die Abschnitte 20 sowie 20' und 20". Hat $T_E$ einen sehr hohen Wert, so sinkt derselbe bei laufendem Kompressor 1 sehr schnell und stark ab, weil das Expansionsventil 8 gemäß den obigen Ausführungen nur wenig geöffnet oder geschlossen ist, solange $T_E$ oberhalb des Schwellwertes $T_{max}$ liegt. Entsprechend dem starken Temperaturabfall im Bereich 20' der Kurve sinkt auch der Kältemitteldruck saugseitig des Kompressors stark ab, so daß derselbe nur kurzzeitig im Bereich hoher Saugdampfdichte arbeiten muß.

Sobald $T_E$ auf den Schwellwert $T_{max}$ abgesunken ist, wird das Expansionsventil 8 geöffnet, wobei der Öffnungsquerschnitt in Abhängigkeit von der Verdampfereingangstemperatur und damit in Abhängigkeit vom Signal $T_E$ geregelt wird, wobei $T_E$ nur langsam sinkt bzw. eine gewisse Zeit annähernd konstant bleibt. Diese Betriebsphase dient vor allem dazu, die Differenz $T_D$, welche bei der mit dem Abschnitt 20' dargestellten Betriebsphase angestiegen ist, zu vermindern.

Sobald $T_E$ auf den weiteren Schwellwert $T'_{max}$ abgesunken ist, oder wenn sich zwischen Verdampfereingangstemperatur $T_E$ und Verdampferausgangstemperatur $T_A$ eine geringe Differenz von beispielsweise 2° K eingestellt hat, erfolgt die weitere Regelung des Expansionsventiles 8 sollwertsabhängig, d.h. in Abhängigkeit von der Temperaturdifferenz $T_D$ zwischen $T_A$ und $T_E$. Dabei sinkt $T_E$ entsprechend einem Kurvenabschnitt 20 ab. In einer Betriebsphase wird das Expansionsventil 8 im Sinne einer zunehmenden Öffnung angesteuert, wenn die Temperaturdifferenz $T_D$ einen Sollwert überschreitet, bzw. im Sinne einer zunehmenden Schließung, wenn $T_D$ kleiner als der Sollwert ist. Wenn $T_D$ hinreichend mit dem Sollwert übereinstimmt, verharrt das Expansionsventil in seiner jeweiligen Stellung.

Die Kurve 21 zeigt die Verhältnisse, welche sich ergeben, wenn die Regelung des Expansionsventiles 8 ausschließlich in Abhängigkeit von der Temperaturdifferenz $T_D$ vorgenommen wird. Man erkennt, daß der Kompressor 1 verhältnismäßig lange Zeit bei relativ hoher Verdampfereingangstemperatur und damit bei hohem saugseitigen Druck arbeiten müßte.

**Ansprüche**

1. Verfahren zum Regeln des Kältemittelzustromes zu einem Verdampfer von Kälteanlagen bzw. Wärmepumpen, deren Kältemittelkreislauf von der Druckseite eines Kompressors (1) über einen Kondensator (2), an oder hinter dessen Ausgang ein Sammler (7) angeordnet sein kann, über ein bezüglich seines Öffnungsgrades steuerbares Expansionsventil (8) sowie über einen Verdampfer (3) zur Saugseite des Kompressors (1) verläuft, und deren Expansionsventil (8) mittels eines durch Rechner (10) gesteuerten Stellmotors (4) in Abhängigkeit der Signale ($T_E, T_A$) von eingangs- und ausgangsseitig des Verdampfers (3) angeordneten temperaturempfindlichen Sensoren (5,6) sollwertsabhängig regelbar ist, wobei
   - falls die Eingangstemperatur ($T_E$) am Verdampfer (3) unterhalb eines Schwellwertes ($T_{max}$) liegt, das Expansionsventil (8) im Sinne einer zunehmenden Öffnung betätigt wird, wenn die Differenz ($T_D$) zwischen Eingangs- und Ausgangstemperatur ($T_E, T_A$) am Verdampfer (3) einen Sollwert ($T_{Dsoll}$) überschreitet, bzw. im Sinne einer zunehmenden Schließung, wenn die genannte Differenz ($T_D$) den Sollwert unterschreitet, und
   - falls die Eingangstemperatur ($T_E$) am Verdampfer (3) oberhalb des Schwellwertes ($T_{max}$) liegt, das Expansionsventil (8) in Schließrichtung verstellt wird,

   dadurch gekennzeichnet, daß, falls die Eingangstemperatur ($T_E$) am Verdampfer (3) in der Nähe des Schwellwertes ($T_{max}$) bzw. zwischen diesem und einem benachbarten Schwellwert ($T'_{max}$) liegt, das Expansionsventil (8) ausschließlich in Abhängigkeit von der Eingangstemperatur ($T_E$) gesteuert wird, und zwar derart, daß die Eingangstemperatur ($T_E$) nahezu konstant bleibt bzw. nur wenig absinkt, wobei sich die Ausgangstemperatur ($T_A$) am Verdampfer (3) an die Eingangstemperatur ($T_E$) annähert.

2. Verfahren nach Anspruch 1, dadurch gekennzeichnet, daß das Expansionsventil so lange ausschließlich in Abhängigkeit von der Eingangstemperatur ($T_E$) gesteuert wird, bis die Verdampferausgangstemperatur ($T_A$) einen Wert dicht (z.B. 2° K) unterhalb der Verdampfereingangstemperatur ($T_E$) erreicht hat und/oder die Verdampfereingangstemperatur ($T_E$) auf einen zweiten Schwellwert ($T'_{max}$) abgesunken ist, der relativ dicht (z.B. 2° K) unterhalb des ersten Schwellwertes ($T_{max}$) liegt.

3. Verfahren nach einem der Ansprüche 1 oder 2, dadurch gekennzeichnet, daß das Expansionsventil (8) zunächst vollständig geschlossen wird, wenn die Eingangstemperatur ($T_E$) am Verdampfer (3) oberhalb des Schwellwertes ($T_{max}$) liegt, und dann gesteuert, insbesondere kurzzeitig bzw. mehrfach kurzzeitig, geöffnet wird, wenn die Eingangstemperatur ($T_E$) trotz laufendem Kompressor langsamer als vorgesehen bzw. erwartet absinkt bzw. wenn der Schwellwert ($T_{max}$) der Eingangstemperatur nicht nach einer vorgebbaren Zeitspanne erreicht wird.

4. Verfahren nach Anspruch 3, dadurch gekennzeichnet, daß das Expansionsventil (8) impulsmäßig geöffnet und durch Impulsbreitenmodulation gesteuert wird.

5. Verfahren nach einem der Ansprüche 1 bis 4, dadurch gekennzeichnet, daß das Expansionsventil (8) bei stillstehendem Kompressor (1) vollständig geschlossen wird.

**Claims**

1. A method for regulating the refrigerant flow to an evaporator of a cooling plant or heat pump, in which the refrigerant circuit runs from the pressure side of a compressor (1) via a condensor (2), at or downstream whose outlet a collector (7) can be arranged, via an expansion valve (8) which is controllable with respect to its degree of opening, and via an evaporator (3) until the suction side of the compressor (1), and whose expansion valve (8) can be regulated in dependence on reference values by means a positioning motor (4) controlled by a computer (10) as a function of the signals ($T_E$, $T_A$) from temperature responsive sensors (5, 6) arranged at the inlet and the outlet side of the evaporator (3), in which

   - if the inlet temperature ($T_E$) of the evaporator (3) is below a threshold value ($T_{max}$), the expansion valve (8) is actuated in the sense of an increasing opening, when the difference ($T_D$) between the inlet and outlet temperatures ($T_E$, $T_A$) of the evaporator (3) exceeds a reference value ($T_{Dref}$), or in the sense of an increasing closing, when the said difference ($T_D$) is lower than the reference value, and
   - if the inlet temperature ($T_E$) of the evaporator (3) is above the threshold value ($T_{max}$), the expansion valve (8) is displaced in the closing direction,

   characterized in that

   if the inlet temperature ($T_E$) of the evaporator (3) is in the vicinity of the threshold value ($T_{max}$) or between this threshold value and a neighboring threshold value ($T'_{max}$), the expansion valve (8) is controlled exclusively as a function of the inlet temperature ($T_E$), and indeed in such a manner that the inlet temperature ($T_E$) remains nearly constant, or decreases only by a small amount, the outlet temperature ($T_A$) of the evaporator (3) coming closer to the inlet temperature ($T_E$).

2. Method according to claim 1, characterized in that the expansion valve is controlled exclusively as a function of the inlet temperature ($T_E$) until the outlet temperature of the evaporator ($T_A$) has reached a value slightly lower (e.g. $2\,°K$) than the inlet temperature of the evaporator ($T_E$) and/or the inlet temperature of the evaporator ($T_E$) has decreased to a second threshold value ($T'_{max}$) which is slightly below (e.g. $2\,°K$) the first threshold value.

3. Method according to one of claims 1 or 2, characterized in that the expansion valve (8) is firstly completely closed if the inlet temperature ($T_E$) of the evaporator (3) is above the threshold value ($T_{max}$), and then controllably opened, in particular opened for a short period or a plurality of short periods, if the inlet temperature ($T_E$) decreases more slowly than expected although the compressor is in operation, or if the threshold value ($T_{max}$) of the inlet temperature is not reached after a predetermined time period.

4. Method according to claim 3, characterized in that the expansion valve (8) is opened in a pulsed manner and controlled by modulation of the pulse width.

5. Method according to one of claims 1 to 4, characterized in that the expansion valve (8) is fully closed when the compressor (1) is not operating.

**Revendications**

1. Procédé pour réguler le débit du fluide frigorigène vers un évaporateur d'installations frigorifiques ou de pompes à chaleur dont le circuit de frigorigène passe depuis le côté refoulement d'un compresseur (1) à travers un condenseur (2), à la sortie ou derrière la sortie duquel peut être disposé un collecteur (7), à travers un robinet détendeur (8) dont le degré d'ouverture peut être commandé, ainsi qu'à travers un évaporateur (3) vers le côté aspiration du compresseur (1), et dont le robinet détendeur (8) est réglable selon une valeur de consigne au moyen d'un servomoteur (4), commandé par un calculateur (10), en fonction de signaux ($T_E$, $T_A$) fournis par des détecteurs sensibles à la température (5, 6) placés du côté de l'entrée et du côté de la sortie de l'évaporateur (3), selon lequel

   - au cas où la température d'entrée ($T_E$) sur l'évaporateur (3) est inférieure à un seuil ($T_{max}$), le robinet détendeur (8) est manoeuvré dans le sens d'une plus grande ouverture lorsque la différence ($T_D$) entre les températures d'entrée et de sortie ($T_E$, $T_A$) sur l'évaporateur (3) dépasse une valeur de consigne ($T_{Dco}$) ou dans le sens d'une plus grande fermeture lorsque ladite différence ($T_D$) descend au-dessous de la valeur de consigne, et
   - au cas où la température d'entrée ($T_E$) sur l'évaporateur (3) est supérieure au seuil ($T_{max}$), le robinet détendeur (8) est réglé dans le sens de la fermeture,

   caractérisé en ce que,

   au cas où la température d'entrée ($T_E$) sur l'évaporateur (3) est voisine du seuil ($T_{max}$) ou

est comprise entre celui-ci et un seuil voisin ($T'_{max}$), le robinet détendeur (8) est commandé exclusivement en fonction de la température d'entrée ($T_E$) et ce de manière que la température d'entrée ($T_E$) reste à peu près constante ou baisse seulement de peu, pendant que la température de sortie ($T_A$) sur l'évaporateur (3) s'approche de la température d'entrée ($T_E$).

2. Procédé selon la revendication 1, caractérisé en ce que le robinet détendeur est commandé exclusivement en fonction de la température d'entrée ($T_E$) jusqu'à ce que la température de sortie d'évaporateur ($T_A$) ait atteint une valeur de peu (par exemple de 2° K) inférieure à la température d'entrée d'évaporateur ($T_E$) et/ou jusqu'à ce que la température d'entrée d'évaporateur ($T_E$) soit descendue à un second seuil ($T'_{max}$) qui est inférieure d'une quantité relativement faible (par exemple de 2° K) au premier seuil ($T_{max}$).

3. Procédé selon la revendication 1 ou 2, caractérisé en ce que le robinet détendeur (8) est d'abord fermé complètement lorsque la température d'entrée ($T_E$) sur l'évaporateur (3) est supérieure au seuil ($T_{max}$) et est ensuite ouvert de façon commandée, en particulier brièvement ou à plusieurs reprises pendant peu de temps, lorsque la température d'entrée ($T_E$) descend plus lentement que prévu ou attendu, malgré le fait que le compresseur marche, ou lorsque le seuil ($T_{max}$) de la température d'entrée n'est pas atteint après un laps de temps pouvant être préfixé.

4. Procédé selon la revendication 3, caractérisé en ce que le robinet détendeur (8) est ouvert de façon pulsée et est commandé par modulation d'impulsions en largeur.

5. Procédé selon une des revendications 1 à 4, caractérisé en ce que le robinet détendeur (8) est fermé complètement quand le compresseur (1) est à l'arrêt.

Defrosterbetrieb

$T_{Dsoll}$

$T_A$

$T_E$

10

11

13

9

9

4

5

3

6

8

7

1

12

2

Fig.1

# Fig. 2

Fig.3